# EUROPEAN PATENT SPECIFICATION

(11) **EP 2 697 056 B1**
(45) Date of publication and mention of the grant of the patent: **04.03.2015**
(21) Application number: 12713840.2
(22) Date of filing: 05.04.2012
(51) Int. Cl.: B32B 3/04, B32B 17/06, B65H 37/06, B29C 63/00

(54) **METHODS AND APPARATUSES FOR APPLYING A HANDLING TAB TO CONTINUOUS GLASS RIBBONS**
VERFAHREN UND VORRICHTUNGEN ZUM ANBRINGEN EINER HALTELASCHE ZUR HANDHABUNG KONTINUIERLICHER GLASBÄNDER
PROCÉDÉS ET DISPOSITIFS POUR L'APPLICATION D'UNE LANGUETTE DE RETENUE AUX RUBANS DE VERRE CONTINUS

(30) Priority: 11.04.2011 US 201113083960
(43) Date of publication of application: 19.02.2014
(73) Proprietor: Corning Incorporated, Corning, New York 14831 (US)
(72) Inventor: MARSHALL, Dale C., Brockport, New York 14420 (US); MERZ, Gary Edward, Rochester, New York 14610 (US); MORGAN, Kenneth Spencer, Painted Post, New York 14870 (US); TOSCH, John Earl, Wellsburg, New York 14894 (US)
(74) Representative: Sturm, Christoph
(86) International application number: PCT/US2012/032240
(87) International publication number: WO 2012/141962

(56) References cited:
- CN-Y- 201 087 172
- CN-Y- 201 109 667
- DE-A1- 10 323 303
- DE-A1- 19 923 683
- GB-A- 1 418 565
- GB-A- 2 407 062
- US-A- 4 211 598
- US-A- 4 486 261
- US-A- 5 678 689
- US-A1- 2010 260 964
- US-A1- 2011 023 548

## Description

### BACKGROUND

### Field

The present specification generally relates to the manufacture of glass substrates and, more specifically, to methods and apparatuses for applying a handling tab to an edge of a glass substrate.

### Technical Background

Thin glass substrates can be used in a variety of applications, including so-called "e-paper" and touch sensors. The glass for such substrates can be quite thin, typically less than about 0.3 mm. The processing of the substrates can be performed on an individual glass sheet basis, or most efficiently, by conveying the substrate as a long glass ribbon wound on a roller. The method includes dispensing the ribbon from one roller, processing the dispensed portion, and then winding the ribbon onto a take-up roller.

One drawback to a so-called "roller-to-roller" process is the fragility of the thin glass ribbon - mechanical contact of the ribbon during handling can lead to damage, including scratches, chipping and in the worst case, fracture. What is needed are alternative methods and apparatuses as for applying handling tabs to edges of a glass substrates, in either sheet or ribbon form, such that the glass substrates can be handled without damage to the glass.

US 2011/0023548 A1 discloses a glass substrate comprising: first and second major surfaces and first and second edges, the first and second edges separated by a width; a flexible coating disposed over at least a portion of the first and second major surfaces, the coating comprising web portions extending from at least one of the first and second edge a distance of at least 1 mm. The coating can be applied as a liquid to the glass or as a pre-formed sheet. Suitable pre-formed films can be polymers. In some embodiments the web portion(s) extend up to 1 cm or more from the edge of the glass substrate.

GB 1 418 565 A discloses a device for handling plates and for executing polygonal paths or tracks. GB 1 418 565 A discloses an embodiment constituting the last fabrication stage of a triple glazing which is composed of three glass sheets, held apart and connected together by means of two spacer of an adhesive plastics material. The assembly may be gripped by one of their faces by the machine disclosed. An apparatus seals the edges of the insulating glass. The apparatus is completed by a device enabling the edges of the pane to be rimmed or framed.

US 4 486 261 A discloses an apparatus for the application of an adhesive tape, longitudinally and with U-shaped cross section, about the edge of a shaped part of sheet metal, is provided with tape-guiding means comprising conveying rollers, and means for pre-folding the adhesive tape from which the pre-folded tape runs between a pair of application rollers spring-biased against each other and being adapted to press the tape on to both sides of the shaped sheet metal part being introduced into the tape-folding zone.

### SUMMARY

The embodiments described herein relate to methods of applying a handling tab to a glass substrate to mitigate damage to the glass substrate during handling. The handling tab also maintains the integrity of the glass substrate in the event that the glass substrate is fractured from edge to edge during conveyance (i.e., the handling tab holds the broken substrate together). Also disclosed are apparatuses for folding an adhesive tape ribbon onto a glass substrate to form a handling tab which may be used to mitigate damage to the glass substrate during handling.

The present invention provides a method for forming a glass substrate with a handling tab according to claim 1.

The invention provides further an apparatus for folding an adhesive tape ribbon into a handling tab as defined in claim 9. The apparatus may include an upstream end and a downstream end with a glass conveyance pathway extending in a conveyance direction from the upstream end to the downstream end. The apparatus may also include an unwinding spindle having a spindle axis of rotation that is substantially perpendicular to the glass conveyance direction, the unwinding spindle supporting a wound adhesive tape ribbon. The apparatus may also include a folding plow for folding the adhesive tape ribbon onto the glass substrate drawn on the glass conveyance pathway. The folding plow may include a first wedge and a second wedge positioned such that the glass conveyance pathway is disposed between a contact surface of the first wedge and a contact surface of the second wedge. The apparatus may further comprise a first pair of pinch rollers for laminating the adhesive tape ribbon to the glass substrate drawn on the glass conveyance pathway. The first pair of pinch rollers may be positioned downstream of the folding plow and include a first pinch roller and a second pinch roller positioned such that the glass conveyance pathway is disposed between the first pinch roller and the second pinch roller, the first pinch roller and the second pinch roller having axes of rotation substantially perpendicular to the glass conveyance direction.

Additional features and advantages of the invention will be set forth in the detailed description which follows, and in part will be readily apparent to those skilled in the art from that description or recognized by practicing the embodiments described herein, including the detailed description which follows, the claims, as well as the appended drawings.

It is to be understood that both the foregoing general description and the following detailed description describe various embodiments and are intended to provide an overview or framework for understanding the nature and character of the claimed subject matter. The accompanying drawings are included to provide a further understanding of the various embodiments, and are incorporated into and constitute a part of this specification. The drawings illustrate the various embodiments described herein, and together with the description serve to explain the principles and operations of the claimed subject matter.

### BRIEF DESCRIPTION OF THE DRAWINGS

FIGS. 1-4 schematically depict a partial cross section of a glass substrate and a cross section of an adhesive tape ribbon as the adhesive tape ribbon is applied to the glass substrate to form a handling tab, according to one or more embodiments shown and described herein;
FIG. 5 schematically depicts a partial length of the adhesive tape ribbon which is applied to a glass substrate to form a handling tab, according to one or more embodiments shown and described herein;
FIG. 6 schematically depicts an apparatus for folding an adhesive tape ribbon into a handling tab on an edge of a glass substrate according to one or more embodiments shown and described herein;
FIG. 7 schematically depicts a partial perspective view of the apparatus of FIG. 1;
FIG. 8 schematically depicts a partial top view of the apparatus of FIG. 1;
FIGS. 9A-9C schematically depict cross sections of the apparatus of FIG. 1 as the apparatus is used to apply an adhesive tape ribbon to a glass substrate to form a handling tab; and
FIG. 10 schematically depicts an apparatus for forming a glass substrate from molten glass and applying an adhesive tape ribbon to the edges of the glass substrate to form a handling tab.

### DETAILED DESCRIPTION

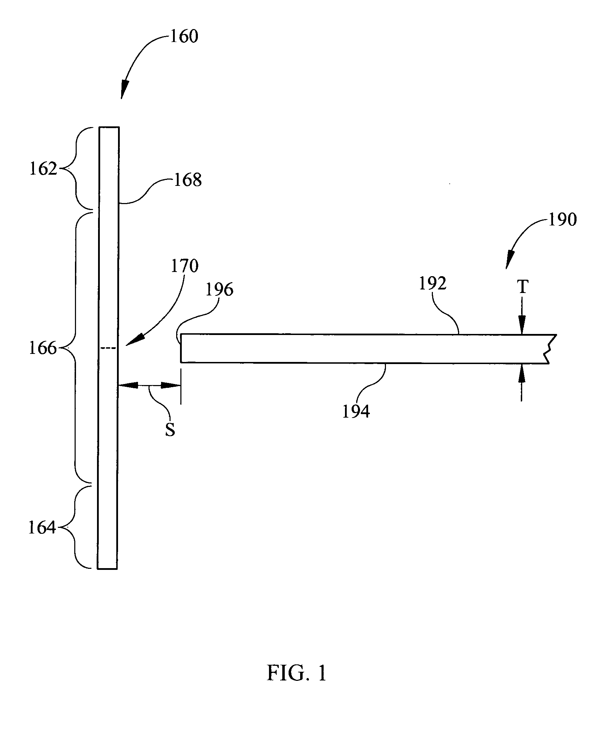

Reference will now be made in detail to embodiments of methods and apparatuses for forming a handling tab on an edge of a glass substrate such that the glass substrates can be handled without damage. FIGS. 1-4 schematically depict one embodiment of a method for folding an adhesive tape ribbon onto an edge of a glass substrate to form a handling tab. The method generally comprises positioning an adhesive tape ribbon adjacent to a lateral edge of the glass substrate such that an adhesive surface of the adhesive tape ribbon is spaced apart from the first lateral edge of the glass substrate and the adhesive surface is substantially perpendicular (e.g., 90 degrees ± 5 degrees) to the first surface and the second surface. The adhesive tape ribbon is then folded such that at least a portion of the glass substrate is positioned between the adhesive surface of a first portion of the adhesive tape ribbon and the adhesive surface of a second portion of the adhesive tape ribbon, and a third portion of the adhesive tape ribbon forms a handling tab extending beyond the first lateral edge of the glass substrate. Methods for forming the handling tab as well as apparatuses for forming the handling tab on the edge of glass substrates will be described in more detail herein with specific reference to the appended drawings.

While glass is known as a brittle material, inflexible and prone to scratching, chipping, and fracture, glass having a thin cross section can in fact be quite flexible. One need only consider the flexibility of hair-thin strands of optical fiber. Similarly, in thin sheets or ribbons, glass can be wound and un-wound from spools, much like paper or plastic film. However, even though glass can be made flexible, it retains its brittle characteristic, and can be damaged by contact. For certain applications, particularly those for which visual defects can be distracting (e.g. display applications), even minor, seemingly cosmetic defects are unacceptable. For other applications requiring high mechanical strength, defects even less than 1 µm can limit the mechanical reliability of the glass article. Thus, handling of the sheets in a manufacturing process, for example the depositing of thin film devices on the sheet, can become a source of loss and high cost.

Although glass substrates can be processed on an individual sheet basis, a more efficient method involves starting with a glass substrate of significant length which is wound on a spool. The glass substrate (in this case a "continuous" glass substrate) can be unwound from the spool, processed, and then re-wound on a second spool. In this context, the term "processed" can include any step subsequent to the formation of the glass, including but not limited to segmenting, grinding, polishing, cleaning, or the deposition of additional layers and/or components (e.g., electrical/electronic components or portions thereof) on the glass. However, in some instances, the transport of the glass ribbon through the processing equipment can require precise positioning of the ribbon. For example, the formation of thin film devices (e.g., transistors, electroluminescent layers, etc.) on the glass substrate may require the ribbon to position, or index, between multiple stations and require exacting registration from station to station. Performing this form of conveyance on a glass substrate less than 0.3 mm or less than 0.1 mm or even less than 0.05 mm in thickness is difficult enough. Once the devices are formed, there is the problem of stacking or re-winding the ribbon for later use, perhaps in a subsequent manufacturing process, without damage to the glass ribbon or the devices formed on one or both surfaces of the ribbon. The aforementioned difficulties can be mitigated by forming a handling tab on an edge or edges of the glass substrate.

Referring to FIGS. 1-4, one method of applying a handling tab 174 to an edge of a glass substrate 190 is schematically depicted. In the embodiments shown and described herein, the glass substrate 190 (shown in partial cross section in FIGS. 1-4) includes a first major surface 192 opposed to a second major surface 194. The surfaces extend between a first lateral edge 196 and a second lateral edge (not shown in FIGS. 1-4). In the embodiments described herein, the glass substrate 190 generally has a thickness T of less than 0.5 mm. In some embodiments, the thickness T of the glass substrate 190 may be less than 0.3 mm, less than 0.1 mm or even less than 0.05 mm. In the embodiments described herein the glass substrate 190 is continuous, such as when the glass substrate 190 is a web of glass which is unwound from a storage spool which holds a web of glass having an extensive length, or alternatively, the glass substrate can be continuously drawn from a batch of molten glass. In yet another alternative, the glass substrate 190 may be a discrete glass substrate, such as an individual glass substrate sectioned from a web of glass.

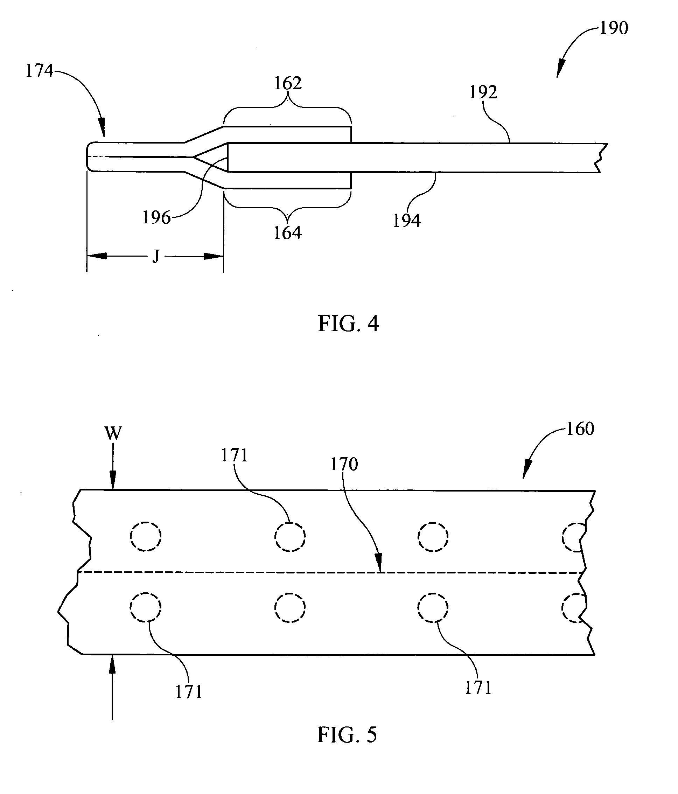

The handling tab 174 is formed from an adhesive tape ribbon 160, such as the adhesive tape ribbon illustrated in FIG. 5 and shown in cross section in FIGS. 1-4. The adhesive tape ribbon may be formed from a polymeric material, such as silicone, polyimide or another, similar material. In general, the material from which the adhesive tape ribbon is formed is selected to be compatible with the processing operations which the glass substrate will be subjected to after the adhesive tape ribbon is applied to the glass substrate to form a handling tab.

The adhesive tape ribbon 160 generally has an adhesive surface 168 which includes an adhesive suitable for bonding the adhesive tape ribbon 160 to a glass substrate. In some embodiments, the adhesive tape ribbon 160 may be formed with perforations 170 which extend along the axial length of the adhesive tape ribbon 160. The perforations 170 facilitate folding the adhesive tape ribbon on a predetermined fold line (i.e., a fold line defined by the perforations 170). In some embodiments, the perforations 170 are centered between the edges of the adhesive tape ribbon 160 and generally extend along the entire axial length of the adhesive tape ribbon. However, it should be understood that the perforations 170 may be formed at other locations between the edges of the adhesive tape ribbon 160 depending on the specific requirements of the application.

The adhesive tape ribbon 160 can optionally include other features. For example, in the embodiment of the adhesive tape ribbon 160 depicted in FIG. 5, the adhesive tape ribbon 160 includes a plurality of apertures 171 symmetrically formed about the center of the ribbon such that, when the adhesive tape ribbon 160 is folded along the perforations 170, opposing apertures are aligned with one another. The apertures in the adhesive tape ribbon 160 may be sized and positioned to engage with corresponding pins or teeth of a sprocket thereby enabling the glass substrate 190 to be conveyed without contacting the glass. In addition, the adhesive tape ribbon 160 may include marking indicia (not shown), such as line segments or the like, which may be used to mechanically or optically determine a length of the glass substrate to which the adhesive tape ribbon is attached.

In some embodiments, the adhesive tape ribbon can include a strengthening member to provide increased strength to the ribbon. For example, a preformed tape may include glass or polymer fibers (e.g., Kevlar® fibers) which provide additional strength to the coating material.

In one embodiment, the adhesive tape ribbon is Kapton® tape with an acrylic adhesive with a total thickness preferably in the range between about 50 µm and 100 µm (e.g., 63.5 microns). The Kapton® tape facilitates processing of the glass substrate at temperatures as high as 300°C.

Referring again to FIGS. 1-4, the handling tab 174 is formed on the first lateral edge 196 of the glass substrate 190 by first positioning the adhesive tape ribbon 160 adjacent to the first lateral edge 196 of the glass substrate 190 such that the adhesive surface 168 is facing the edge 196 of the glass substrate 190 and is spaced apart from the edge 196 of the glass substrate 190 by a distance S. The distance S is selected based on the width W of the adhesive tape ribbon 160 and the desired width J (shown in FIG. 4) of the resultant handling tab 174. With the adhesive tape ribbon 160 in this orientation, the adhesive surface 168 is substantially perpendicular (e.g., 90 degrees ± 5 degrees) to the first major surface 192 and the second major surface 194 of the glass substrate 190. In the embodiment shown in FIG. 1, the perforations 170 are approximately aligned with the center of the glass substrate 190 in the direction of the thickness T. However, it should be understood that the positioning of the perforations 170 relative to the glass substrate 190 may be adjusted to achieve the desired configuration of handling tab 174.

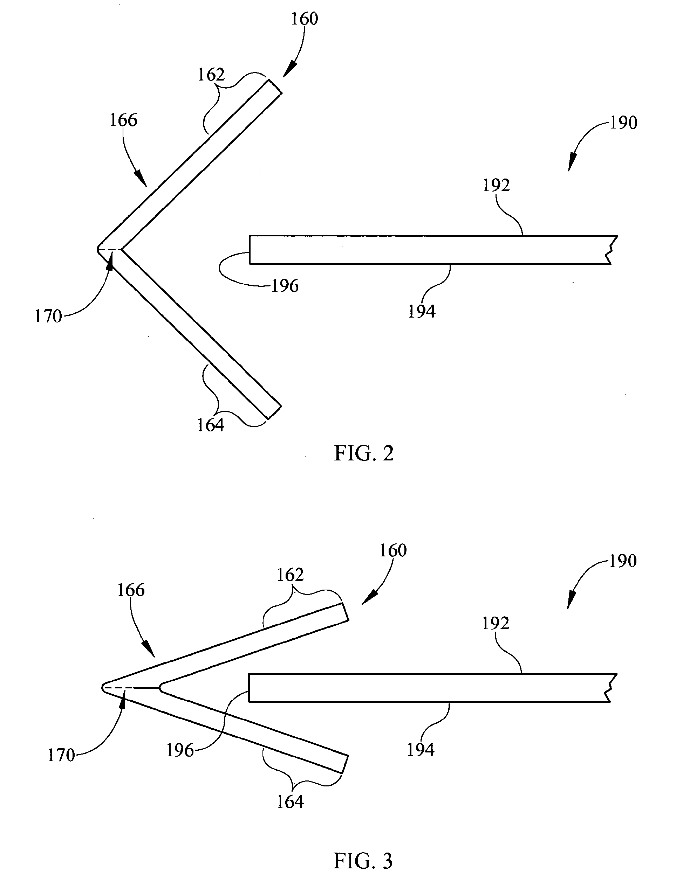

Referring now to FIGS. 2 and 3 the adhesive tape ribbon 160 is progressively folded about the perforations 170 such that at least a portion of the glass substrate 190 is positioned between the adhesive surface of a first portion 162 of the adhesive tape ribbon 160 and the adhesive surface of a second portion 164 of the adhesive tape ribbon 160. During the folding operation, a third portion 166 of the adhesive tape ribbon positioned between the first portion 162 and the second portion 164 remains spaced apart from the first lateral edge 196 of the glass substrate 190.

The folding operation proceeds until the adhesive surface 168 of the first portion 162 of the adhesive tape ribbon 160 contacts and is adhesively bonded to the first major surface 192 of the glass substrate 190 and the second portion 164 of the adhesive tape ribbon 160 contacts and is adhesively bonded to the second major surface 194 of the glass substrate 190, as shown in FIG. 4. Following folding, the third portion 166 of the adhesive tape ribbon 160 forms a handling tab 172 that extends beyond the first lateral edge 196 of the glass substrate 190. Specifically, the handling tab 172 has a width J from the first lateral edge 196 which is determined by the initial separation distance S between the adhesive tape ribbon 160 and the first lateral edge 196 of the glass substrate 190, as described above. In one embodiment, after folding, the adhesive surface of the third portion 166 of the adhesive tape ribbon 160 is not in contact with the first lateral edge 196 of the glass substrate 190, as depicted in FIG. 4. However, in other embodiments (not shown) the adhesive surface of the third portion 166 of the adhesive tape ribbon 160 is in contact with the first lateral edge 196 of the glass substrate 190.

In one embodiment, after the handling tab 172 is formed on the glass substrate 190, the first portion 162 of the adhesive tape ribbon 160 is laminated against the first major surface 192 of the glass substrate and the second portion 164 is laminated against the second major surface 194 of the glass substrate 190. The laminating process is performed by pressing the adhesive tape ribbon 160 against the major surfaces of the glass substrate 190, such as with a roller or similar device, in order to remove any creases or air bubbles formed between the adhesive tape ribbon 160 and the glass substrate 190 and to firmly bond the adhesive of the adhesive tape ribbon 160 to the major surfaces of the glass substrate 190. In one embodiment, the first portion 162 of the adhesive tape ribbon 160 and the second portion 164 of the adhesive tape ribbon 160 are simultaneously laminated with a pair of opposed pinch rollers, as will be described in more detail herein. As noted hereinabove, the glass substrate 190 may be brittle and subject to damage. Accordingly, the rollers used to laminate the adhesive tape ribbon 160 to the glass substrate 190 may be coated with a compliant material such that the contact surfaces of the rollers are compliant and the glass substrate is cushioned between the pinch rollers.

In another embodiment, after the handling tab 172 is formed on the glass substrate 190, the handling tab 172 is compressed to laminate the handling tab 172. The handling tab 172 may be compressed between a pair of opposed pinch rollers which remove any creases or air bubbles formed in the handling tab 172 and force the adhesive surfaces of the adhesive tape ribbon 160 together.

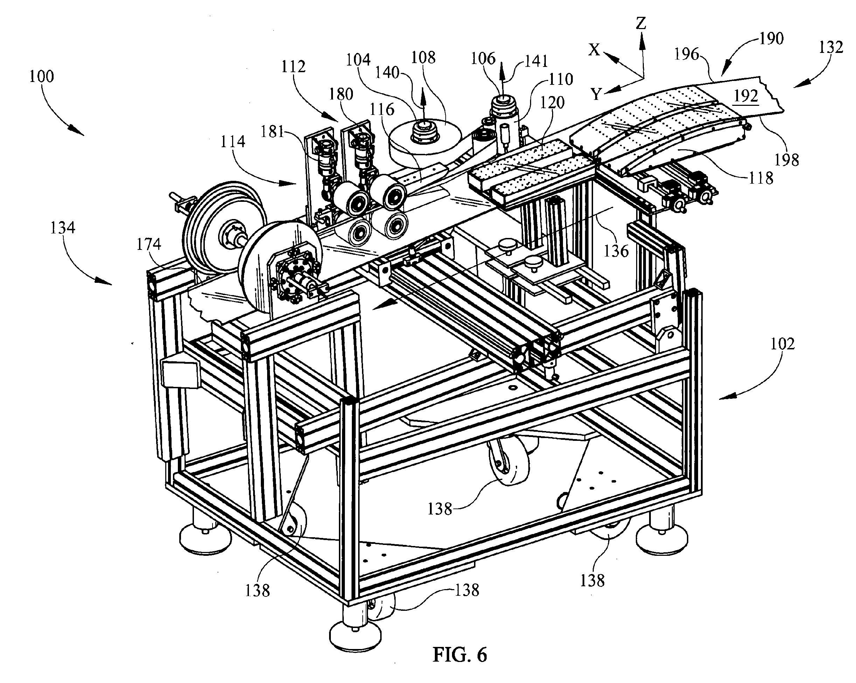

Referring now to FIGS. 6-8, a folding apparatus 100 for forming a handling tab on an edge 196 of a glass substrate 190 utilizing the method described hereinabove is schematically depicted. The folding apparatus 100 extends between an upstream end 132 and a downstream end 134 with a glass conveyance pathway extending through the folding apparatus 100 from the upstream end 132 to the downstream end 134. A glass substrate 190 enters the folding apparatus 100 at the upstream end 132, is drawn through the folding apparatus 100 on the glass conveyance pathway in the conveyance direction 136 as a handling tab 172 is applied with the folding apparatus 100, and exits the folding apparatus 100 at the downstream end 134.

The folding apparatus 100 generally comprises an unwinding spindle 104, a folding plow 116, and a first pair of pinch rollers 112. In the embodiment of the folding apparatus 100 shown in FIG. 6, the unwinding spindle 104, folding plow 116, and first pair of pinch rollers 112 are mounted on a base frame 102. In one embodiment, the base frame 102 may facilitate repositioning the folding apparatus 100. For example, the base frame 102 may comprise a plurality of casters 138 such that the folding apparatus 100 may be wheeled to a different location and/or orientation. However, it should be understood that, in other embodiments (not shown), one or more of the various components of the folding apparatus 100 (e.g., the unwinding spindle 104, folding plow 116, etc.) may be mounted on different support frames.

Still referring to FIGS. 6-8, in the embodiment of the folding apparatus 100 shown in FIG. 6, the unwinding spindle 104 is mounted adjacent to the glass conveyance pathway and oriented such that the spindle axis of rotation 140 is substantially perpendicular (e.g., 90 degrees ± 5 degrees) to the glass conveyance direction 136 and substantially perpendicular (e.g., 90 degrees ± 5 degrees) to the first major surface 192 of the glass substrate 190 as the glass substrate 190 passes through the folding plow 116. The unwinding spindle supports a spool 108 of wound adhesive tape ribbon which may be unwound from the unwinding spindle 104 and applied to the glass substrate 190.

In the embodiment of the folding apparatus 100 depicted in FIGS. 6-8, the folding apparatus 100 further comprises a collecting spindle 106 which supports a collecting spool 110. The collecting spindle 106 is mounted adjacent to the glass conveyance pathway and oriented such that the spindle axis of rotation 141 is substantially parallel (e.g., 0 degrees ± 5 degrees) to the axis of rotation 140 of the unwinding spindle 104. The collecting spindle 106 supports a collecting spool 110 onto which a backing material removed from the adhesive tape ribbon 160 as the adhesive tape ribbon is unwound from the unwinding spindle 104 may be wound to prevent the backing material from become entangled with the glass substrate 190.

While FIGS. 6-8 depict the folding apparatus 100 as comprising a collecting spindle 106, it should be understood that this component is optional and that, in other embodiments (not shown) the folding apparatus 100 is formed without the collecting spindle 106, such as when the adhesive tape ribbon 160 applied to the glass substrate 190 with the folding apparatus 100 does not contain a backing material.

Referring now to FIGS. 6-8 and 9A, in the embodiments described herein the folding plow 116 is mounted on the base frame 102. The folding plow 116 generally comprises a first wedge 128 and a second wedge 130. The first wedge 128 and the second wedge 130 are formed from a material which has a low coefficient of friction with respect to the adhesive tape ribbon which the folding plow 116 folds onto the glass substrate 190 such that the adhesive tape ribbon does not bind against the first wedge 128 and/or the second wedge 130. Suitable materials from which the first and second wedges may be formed include materials with high stiffness and a low coefficient of friction with respect to the adhesive tape ribbon. For example, in one embodiment, the first and second wedges are formed from Delrin® thermoplastic manufactured by DuPont.

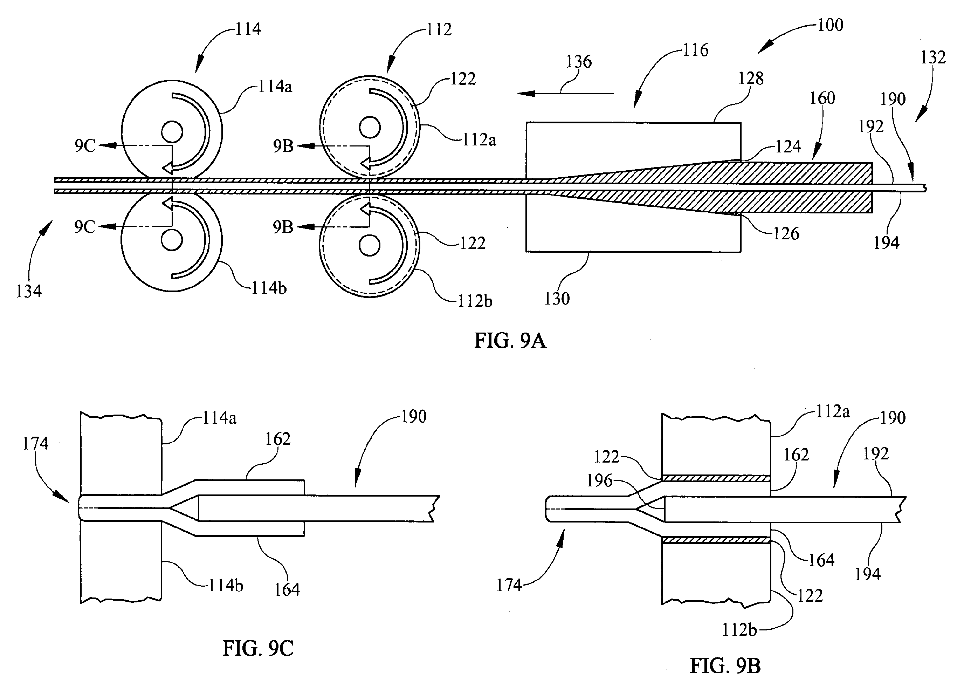

Referring to FIG. 9A, the first wedge 128 is formed with a first contact surface 124 and the second wedge 130 is formed with a second contact surface 126. The first wedge 128 and the second wedge 130 are oriented such that a spacing between the first contact surface 124 and the second contact surface 126 tapers in the conveyance direction 136. The first wedge 128 and the second wedge 130 are also oriented such that the glass conveyance pathway passes between the first contact surface 124 and the second contact surface 126. More specifically, the first wedge 128 and the second wedge 130 are oriented such that, as the glass substrate 190 is drawn on the glass conveyance pathway in the conveyance direction 136, a first major surface 192 of the glass substrate 190 is opposed to the first contact surface 124 and a second major surface 194 of the glass substrate 190 is opposed to the second contact surface 126.

In general, the spacing between the first contact surface 124 and the second contact surface 126 at the outlet end of the folding plow 116 is slightly larger than the sum of the thickness of the glass substrate and twice the thickness of the tape such that the glass substrate with the tape adhered to its first and second major surfaces can pass between the first wedge 128 and the second wedge 130 without binding.

Referring again to FIGS. 6-8 and 9A, the first pair of pinch rollers 112 are positioned downstream of the folding plow 116. The first pair of pinch rollers 112 includes a first pinch roller 112a and a second pinch roller 112b which are oriented in opposition to one another such that the axes of rotation of the pinch rollers are substantially perpendicular (e.g., 90 degrees ± 5 degrees) to the glass conveyance direction and parallel to the first major surface 192 and the second major surface 194 of the glass substrate 190. The glass conveyance pathway and the glass substrate 190 are disposed between the pinch rollers 112a and 112b. More specifically, the first and second pinch rollers 112a and 112b are oriented such that, as the glass substrate 190 is drawn on the glass conveyance pathway in the conveyance direction 136, the first pinch roller 112a contacts the adhesive tape ribbon folded onto a first major surface 192 of the glass substrate 190 and the second pinch roller 112b contacts the adhesive tape ribbon folded on to a second major surface 194 of the glass substrate 190, as depicted in FIGS. 9A and 9B and, as such, at least a portion of the glass substrate 190 is disposed between the first pinch roller 112a and the second pinch roller 112b. A pneumatic cylinder 180 provides a constant biasing force to the first pinch roller 112a thereby impinging the glass substrate 190 and the adhesive tape ribbon 160 between the first pinch roller 112a and the second pinch roller 112b.

In the embodiments described herein, the contact surfaces of the first pinch roller 112a and the second pinch roller 112b are coated with a layer of compliant material 122, such as rubber or another, similar material, to prevent the first pinch roller 112a and/or the second pinch roller 112b from damaging the surface of the glass substrate 190. For example, in one embodiment, the compliant surface 122 may have a durometer of 25 on the shore A scale (as measured according to ASTM standard D2240) such that the compliant material is firm enough to laminate the adhesive tape ribbon onto the surfaces of the glass substrate 190 and resilient enough to avoid damaging the glass substrate.

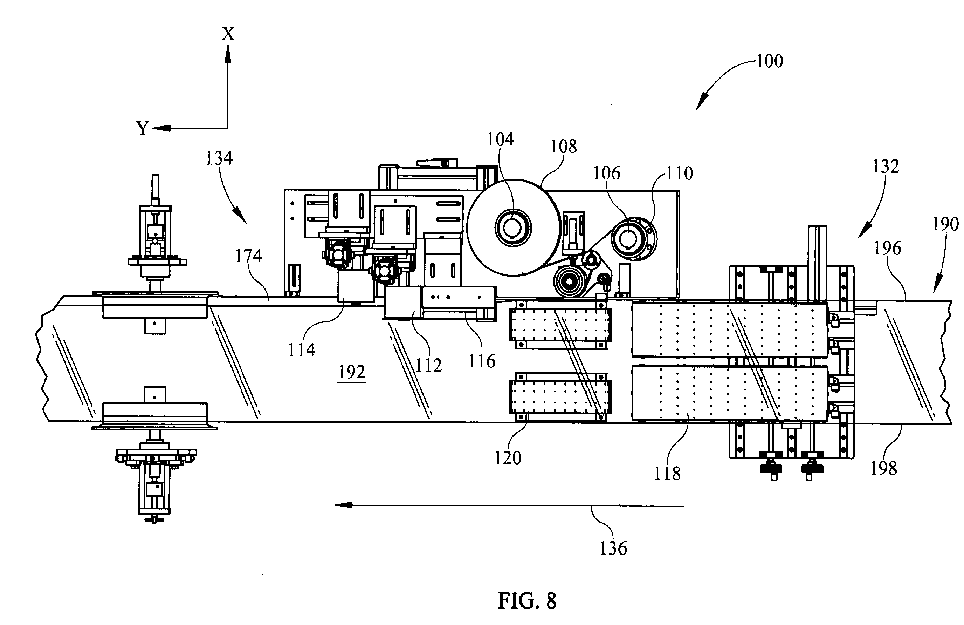

Referring again to FIGS. 6-8 and 9A, in some embodiments described herein, the folding apparatus further comprises a second pair of pinch rollers 114 positioned downstream of the first pair of pinch rollers 112. The second pair of pinch rollers 114 includes a third pinch roller 114a and a fourth pinch roller 114b which are oriented in opposition to one another such that the axes of rotation of the pinch rollers are substantially perpendicular (e.g., 90 degrees ± 5 degrees) to the glass conveyance direction and parallel to the first major surface 192 and the second major surface 194 of the glass substrate 190. The glass conveyance pathway and the glass substrate 190 are disposed between the pinch rollers 114a and 114b. The second pair of pinch rollers 114 are offset from the first pair of pinch rollers 112 in the axial direction (i.e., the x-direction in FIG. 8) such that, as the glass substrate 190 is drawn on the glass conveyance pathway in the conveyance direction 136, only the handling tab 174 is impinged between the third pinch roller 114a the fourth pinch roller 114b (as depicted in FIG. 9C) and the glass substrate 190 is not impinged between the third pinch roller 114a and the fourth pinch roller 114b. Because the glass substrate 190 is not impinged between the third pinch roller 114a and the fourth pinch roller 114b, the third pinch roller 114a and the fourth pinch roller 114b do not have a compliant coating. Moreover, a greater amount of force may be exerted on the third pinch roller 114a and the fourth pinch roller 114b to remove any wrinkles or air pockets introduced in the handling tab 176 during the folding process. As with the first pinch roller 112a and the second pinch roller 112b, a pneumatic cylinder 181 provides a constant biasing force to the third pinch roller 114a thereby impinging the handling tab 176 between the third pinch roller 114a and the fourth pinch roller 114b.

The folding apparatus 100 has heretofore been described as comprising a folding plow 116, a first pair of pinch rollers 112 and, optionally, a second pair of pinch rollers 114 in order to fold an adhesive tape ribbon to one edge 196 of a glass substrate 190 thereby forming a handling tab 176. However, it should be understood that an additional folding plow and one or more additional pairs of pinch rollers may be incorporated in the apparatus in order to fold an adhesive tape ribbon on to the opposing edge 198 of the glass substrate 190. Accordingly, it should be understood that the folding apparatus 100 may be utilized to form a handling tab on both edges of a glass substrate.

Referring again to FIGS. 6-8, the folding apparatus 100 may further comprise one or more air flotation devices for supporting the glass substrate 190 as it is conveyed through the folding apparatus 100. For example, in one embodiment, the folding apparatus 100 may comprise a first air flotation device 118 having a curved surface over which the glass substrate 190 is conveyed. The air flotation device 118 emits multiple streams of compressed air which create an air cushion on which the glass substrate 190 is supported, preventing the glass substrate 190 from sagging as well as preventing damage to the glass substrate 190 due to mechanical contact. Moreover, the curved surface of the air flotation device 118 allows the glass substrate to be redirected through the folding apparatus 100 without mechanical contact. In the embodiment of the folding apparatus 100 shown in FIGS. 6-8, the folding apparatus 100 further comprises a second air flotation device 120 which supports the glass substrate 190 after the glass substrate 190 has been redirected by the first air flotation device 118.

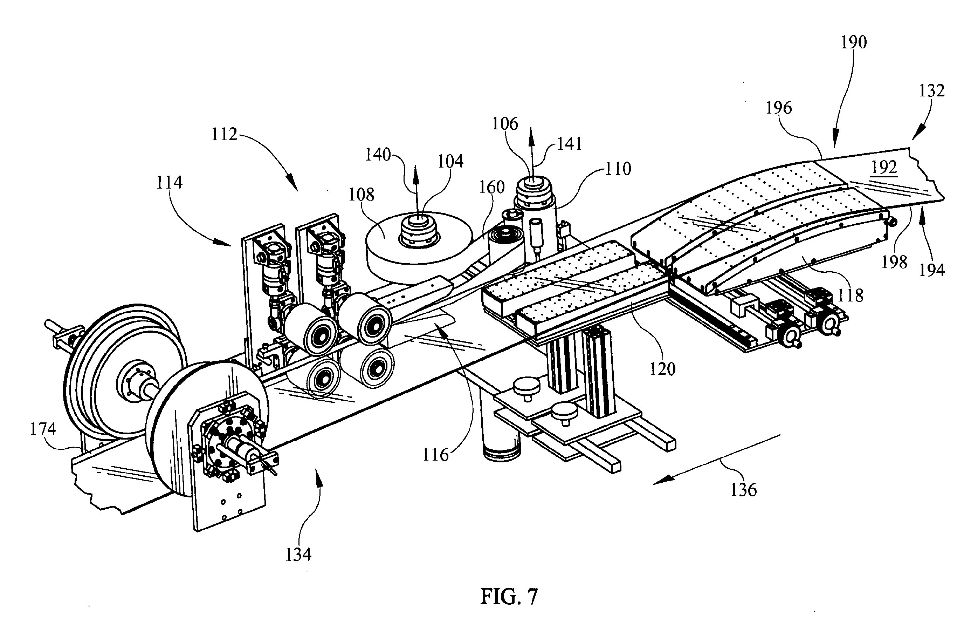

Referring now to FIGS. 7 and 9A-9C, the folding apparatus 100 may be used to form a handling tab 172 which extends beyond an edge 196 of the glass substrate 190. The glass substrate 190 is first conveyed in a conveyance direction 136 into an upstream end 132 of the folding apparatus 100 and conveyed on a glass conveyance pathway through the folding apparatus 100. As the glass substrate 190 is conveyed through the folding apparatus 100, an adhesive tape ribbon 160 is unwound from the unwinding spindle 104 and drawn in the conveyance direction 136. As the adhesive tape ribbon 160 is drawn in the conveyance direction 136, the adhesive tape ribbon 160 is positioned adjacent to a lateral edge 196 of the glass substrate 190 such that an adhesive surface 168 of the adhesive tape ribbon 160 faces and is spaced apart from the lateral edge 196 of the glass substrate 190 and the adhesive tape ribbon 160 is substantially perpendicular to the first major surface 192 of the glass substrate 190.

Thereafter, the adhesive tape ribbon 160 and the glass substrate 190 are directed through the folding plow 116. The folding plow 116 folds the adhesive tape ribbon 160 onto the glass substrate 190 such that, after the adhesive tape ribbon 160 and the glass substrate 190 exit the folding plow 116, at least a portion of the glass substrate 190 is positioned between the adhesive surface of a first portion of the adhesive tape ribbon 160 and the adhesive surface of a second portion of the adhesive tape ribbon 160, and a third portion of the adhesive tape ribbon 160 disposed between the first portion and the second portion forms a handling tab 172 extending beyond the edge 196 of the glass substrate 190, as described above.

Specifically, referring to FIG. 9A-9C, as the adhesive tape ribbon 160 and the glass substrate 190 are directed through the folding plow 116, the first contact surface 124 of the first wedge 128 contacts the adhesive tape ribbon 160 and folds a first portion 162 of the adhesive tape ribbon 160 onto the first major surface 192 of the glass substrate. At the same time, the second contact surface 126 of the second wedge 130 contacts the adhesive tape ribbon 160 and folds a second portion 164 of the adhesive tape ribbon 160 onto the second major surface 194 of the glass substrate 190. The first portion 162 and the second portion 164 of the adhesive tape ribbon 160 are folded onto the glass substrate 190 such that a third portion of the adhesive tape ribbon 160 positioned between the first portion 162 and the second portion 164 is folded onto itself and extends beyond the first lateral edge 196 of the glass substrate 190 thereby forming a handling tab 174.

After the first portion 162 and the second portion 164 are folded onto the glass substrate 190, the glass substrate 190 with the applied adhesive tape ribbon 160 is directed through the first pair of pinch rollers 112. In the embodiments described herein, the first pinch roller 112a and the second pinch roller 112b are positioned relative to the glass substrate such that both the glass substrate 190 and the first portion 162 and the second portion 164 of the adhesive tape ribbon 160 are impinged between the compliant surfaces 122 of the pinch rollers. However, in other embodiments, the first pinch roller 112a and the second pinch roller 112b may be sized and configures such that the handling tab 174 is also impinged between the pinch rollers. As the glass substrate 190 passes through the first pair of pinch rollers 112, the first portion 162 and the second portion 164 of the adhesive tape ribbon 160 are laminated on to the first major surface 192 and the second major surface 194 of the glass substrate 190, respectively, while any air pockets and/or creases in the adhesive tape ribbon are pressed out by contact with the pinch rollers. Moreover, the compliant surface 122 of the pinch rollers 112a, 112b prevents the glass substrate 190 from being damaged as it passes through the pinch rollers.

In some embodiments, the handling tab 174 formed during the folding operation may be passed between a second set of pinch rollers 114 to laminate the adhesive surfaces of the handling table 174 to one another as well as to remove any creases and/or air pockets which may have formed in the handling tab 174 during the folding process. As shown in FIGS. 9A and 9C, the second set of pinch rollers 114 are positioned relative to the glass substrate 190 such that only the handling tab 174 is impinged between the third pinch roller 114a and the fourth pinch roller 114b and the glass substrate 190 is not impinged between the third pinch roller 114a and the fourth pinch roller 114b, as depicted in FIG. 9C. This allows for a greater amount of force to be exerted on the handling tab to remove creases and air bubbles without the risk of damaging or crushing the glass substrate. Thereafter, the glass substrate 190, now comprising a handling tab 174, exits the downstream end 134 of the folding apparatus 100 where it may be further processed and/or rolled on to a storage spool.

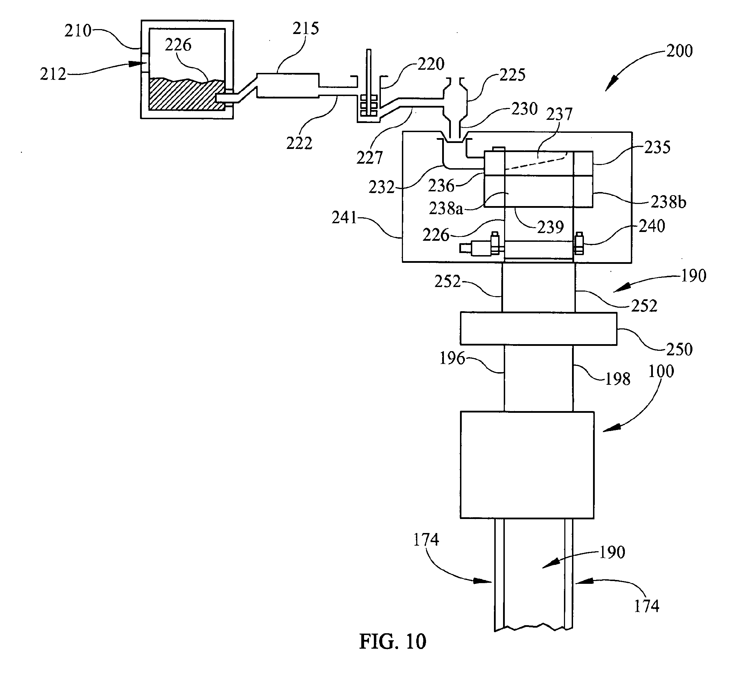

Referring now to FIG. 10, in one embodiment, the folding apparatus 100 for folding an adhesive tape ribbon onto an edge 196 or edges 196, 198 of a glass substrate 190 may be incorporated into a glass manufacturing apparatus 200 which produces a glass substrate 190, such as a continuous glass ribbon, from glass batch materials. The glass manufacturing apparatus 200 may include a melting vessel 210, a fining vessel 215, a mixing vessel 220, a delivery vessel 225, a fusion draw machine (FDM) 241 and the folding apparatus 100. Glass batch materials are introduced into the melting vessel 210 as indicated by arrow 212. The batch materials are melted to form molten glass 226. The fining vessel 215 has a high temperature processing area that receives the molten glass 226 from the melting vessel 210 and in which bubbles are removed from the molten glass 226. The fining vessel 215 is fluidly coupled to the mixing vessel 220 by a connecting tube 222. The mixing vessel 220 is, in turn, fluidly coupled to the delivery vessel 225 by a connecting tube 227.

The delivery vessel 225 supplies the molten glass 226 through a downcomer 230 into the FDM 241. The FDM 241 comprises an inlet 232, a forming vessel 235, and a pull roller assembly 240. As shown in FIG. 10, the molten glass 226 from the downcomer 230 flows into an inlet 232 which leads to the forming vessel 235. The forming vessel 235 includes an opening 236 that receives the molten glass 226 which flows into a trough 237 and then overflows and runs down two sides 238a and 238b before fusing together at a root 239. The root 239 is where the two sides 238a and 238b come together and where the two overflow walls of molten glass 226 rejoin (e.g., refuse) before being drawn downward by the pull roll assembly 240 to form the continuous glass substrate 190.

As the continuous glass substrate 190 exits the pull roll assembly 240, the molten glass solidifies. In one embodiment, after the molten glass solidifies and cools, the glass ribbon may be directed into a cutting device, such as a laser cutting device 250, which removes edge beads 252 formed on the glass substrate 190 during the formation process by laser separation. However, it should be understood that this step is optional and that in other embodiments (not shown) the edge beads 252 may be left in place on the glass substrate 190

The glass substrate 190 is then directed into the folding apparatus where an adhesive tape ribbon may be applied to an edge 196 or edges 196, 198 of the glass substrate (with our without edge beads 252) as described hereinabove. Upon exiting the folding apparatus, handling tabs 174 may be formed on the lateral edges of the glass substrate to facilitate handling the glass substrate during downstream processing operations.

Accordingly, it should now be understood that a method for forming a handling tab on the edge of a glass substrate may include the initial step of forming the glass substrate by heating a batch of glass precursor materials to form molten glass and drawing the molten glass into a glass substrate with a fusion draw machine. Thereafter, an adhesive tape ribbon may be applied to an edge or edges of the glass substrate to form a handling tab according to the methods described herein. In one exemplary embodiment, the adhesive tape ribbon may be formed on an edge or edges of the glass substrate utilizing the folding apparatus depicted in FIG. 6.

Further, while FIG. 10 depicts the folding apparatus 100 being used in an apparatus in which glass substrates are formed from glass batch materials, it should be understood that the folding apparatus may also be utilized in different apparatuses and/or processes. For example, in some embodiments, the glass substrates may be wound onto a storage spool after formation. In such embodiments, the glass substrates may be subsequently unwound from the storage spool to undergo additional processing, such as, for example, segmentation, coating, lamination or the like. In these embodiments, the folding apparatus may be utilized to form a handling tab on the glass substrate when the glass substrates are unwound from the storage spool.

It should now be understood that the methods and apparatuses described herein may be utilized to fold an adhesive tape ribbon on to an edge of a glass substrate to form a handling tab. The handling tab facilitates handling the glass substrate during downstream processing operations without contacting the quality areas (i.e., the central portions of the glass substrate between the lateral edges) of the glass substrate which could create flaws or other defects resulting in the glass substrate being discarded. More specifically, the adhesive tape ribbon holds the glass substrate together even when the glass substrate completely separates between the lateral edges thereby eliminating the need to "re-thread" the glass substrate during production processing after a break occurs. This mitigates production stoppages and maximizes production efficiencies. Moreover, formation of the handling tab from an adhesive tape ribbon facilitates maintaining the continuity of the glass substrate even when the glass substrate fractures. The handling tab also facilitates stacking or rolling a glass substrate such that the quality surfaces of adjacent substrates do not contact one another and cause damage. More specifically, as the glass substrates are wound or stacked, the portions of the adhesive tape ribbon on the surfaces create a buffer between adjacent surfaces with the glass substrates in either a roll or stack.

As described herein, the handling tab is formed by folding a single piece of adhesive tape ribbon onto a glass substrate, as opposed to separate pieces of adhesive tape ribbon being applied individually to the first and second major surfaces of the glass substrate and joined to form the handling tab. Accordingly, because only a single piece of adhesive tape ribbon is utilized, it is not necessary to precisely register a first piece of adhesive tape ribbon with a second piece of adhesive tape ribbon or to trim the handling tab to ensure that no exposed areas of adhesive are present following formation of the handling tab. Exposed areas of adhesive may cause the glass substrate to stick to itself or to pieces of processing equipment causing the glass substrate to fracture. Moreover, exposed areas of adhesive could attract debris which could potentially damage the glass substrate. Accordingly, use of a single piece of adhesive ribbon mitigates such risks.

It will be apparent to those skilled in the art that various modifications and variations can be made to the embodiments described herein without departing from the scope of the claimed subject matter. Thus it is intended that the specification cover the modifications and variations of the various embodiments described herein.

## Claims

1. A method of forming a glass substrate (190) with a handling tab (172), the method comprising:
conveying the glass substrate (190) in a conveyance direction (136), the glass substrate (190) comprising a first major surface (192) opposed to a second major surface (194), the first major surface (192) and the second major surface (1949 extending between a first lateral edge (196) and a second lateral edge (196);
positioning an adhesive tape ribbon (160) adjacent to the first lateral edge (196) of the glass substrate (190) such that an adhesive surface (168) of the adhesive tape ribbon (160) is spaced apart from the first lateral edge (196) of the glass substrate (190) and the adhesive surface (168) is substantially perpendicular to the first major surface (192) and the second major surface (194);
directing the adhesive tape ribbon (160) and the glass substrate (190) through a folding plow (116),
folding the adhesive tape ribbon (160) with the folding plow (116) such that at least a portion of the glass substrate (190) is positioned between the adhesive surface (168) of a first portion (162) of the adhesive tape ribbon (160) and the adhesive surface (168) of a second portion (164) of the adhesive tape ribbon (160), and the adhesive surface (168) of a third portion (166) of the adhesive tape ribbon (160) disposed between the first portion (162) and the second portion (164) is spaced apart from the first lateral edge (196) of the glass substrate (190), the third portion (166) forming the handling tab (172) extending beyond the first lateral edge (196) of the glass substrate (190).

2. The method of claim 1, further comprising:
laminating the first portion (162) of the adhesive tape ribbon (160) against the first major surface (192) of the glass substrate (190); and
laminating the second portion (164) of the adhesive tape ribbon (160) against the second major surface (194) of the glass substrate (190).

3. The method of claim 1, wherein the first portion (162) of the adhesive tape ribbon (160) and the second portion (164) of the adhesive tape ribbon (160) are simultaneously laminated with a pair of opposed pinch rollers (112).

4. The method of claim 1, further comprising compressing the handling tab (172) between a pair of opposed pinch rollers (112).

5. The method of claim 1, wherein, after folding, the adhesive surface (168) of the third portion (166) of the adhesive tape ribbon (160) is not in contact with the first lateral edge (196) of the glass substrate (190).

6. The method of claim 1, wherein the folding plow (116) comprises a first wedge (128) and a second wedge (130) and a contact surface of the first wedge (128) and a contact surface of the second wedge (130) are angled with respect to one another such that a spacing between the first wedge (128) and the second wedge (130) tapers in the conveyance direction.

7. The method of claim 1, further comprising supporting at least a portion of the glass substrate (190) on an air cushion as the adhesive tape ribbon (160) is folded.

8. The method of claim 1, wherein the adhesive tape ribbon (160) is folded about a perforation extending along an axial length of the adhesive tape ribbon (160).

9. An apparatus for folding an adhesive tape ribbon (160) into a handling tab (172) on an edge (196) of a glass substrate (190), the apparatus comprising:
an upstream end (132) and a downstream end (134) with a glass conveyance pathway extending in a conveyance direction (136) from the upstream end (132) to the downstream end (134);
an unwinding spindle (104) having a spindle axis of rotation (140) that is substantially perpendicular to the conveyance direction (136), the unwinding spindle (104) supporting a wound adhesive tape ribbon (160);
a folding plow (116) folding the adhesive tape ribbon (160) onto the glass substrate (190) drawn on the glass conveyance pathway, the folding plow (116) comprising a first wedge (128) and a second wedge (130) positioned such that the glass conveyance pathway is disposed between a contact surface of the first wedge (128) and a contact surface of the second wedge (130); and
a first pair of pinch rollers (112) for laminating the adhesive tape ribbon (160) to the glass substrate (190) drawn on the glass conveyance pathway, the first pair of pinch rollers (112) positioned downstream of the folding plow (116) and comprising a first pinch roller (112a) and a second pinch roller (112b) positioned such that the glass conveyance pathway is disposed between the first pinch roller (112a) and the second pinch roller (112b), the first pinch roller (112a) and the second pinch roller (112b) having axes of rotation (140) substantially perpendicular to the conveyance direction (136).

10. The apparatus of claim 9, wherein the contact surface of the first wedge (128) and the contact surface of the second wedge (130) are angled with respect to one another such that a spacing between the contact surface of the first wedge (128) and the contact surface of the second wedge (130) tapers in the conveyance direction (136).

11. The apparatus of claim 9, further comprising a second pair of pinch rollers positioned downstream of the first pair of pinch rollers (112), the second pair of pinch rollers comprising a third pinch roller (114a) and a fourth pinch roller (114b) positioned such that the glass conveyance pathway (136) is disposed between the third pinch roller (114a) and the fourth pinch roller (114b), the third pinch roller (114a) and the fourth pinch roller (114b) having axes of rotation (140) substantially perpendicular to the conveyance direction (136), wherein the second pair of pinch rollers are offset from the first pair of pinch rollers in an axial direction.

12. The apparatus of claim 9, wherein the unwinding spindle (104), the folding plow (116) and the first pair of pinch rollers (112) are attached to a base frame (102).

13. The apparatus of claim 9, further comprising at least one air flotation device (118), the at least one air flotation device (118) supporting the glass substrate (190) over at least a portion of the glass conveyance pathway.

14. The apparatus of claim 9, further comprising at least one curved air flotation device (118), the at least one curved air flotation device (118) redirecting the glass substrate (190) from an initial pathway to the glass conveyance pathway.

## Patentansprüche

1. Verfahren zum Bilden eines Glassubstrats (190) mit einer Handhabungslasche (172), wobei das Verfahren Folgendes umfasst:
Befördern des Glassubstrats (190) in einer Förderrichtung (136), wobei das Glassubstrat (190) eine erste Hauptfläche (192) gegenüber einer zweiten Hauptfläche (194) umfasst, wobei sich die erste Hauptfläche (192) und die zweite Hauptfläche (194) zwischen einem ersten Seitenrand (196) und einem zweiten Seitenrand (196) erstrecken,
Positionieren eines Klebebands (160) neben dem ersten Seitenrand (196) des Glassubstrats (190), so dass eine Klebefläche (168) des Klebebands (160) vom ersten Seitenrand (196) des Glassubstrats (190) beabstandet ist und die Klebefläche (168) im Wesentlichen senkrecht zu der ersten Hauptfläche (192) und der zweiten Hauptfläche (194) verläuft,
Lenken des Klebebands (160) und des Glassubstrats (190) durch einen Faltpflug (116),
Falten des Klebebands (160) mit dem Faltpflug (116), so dass mindestens ein Abschnitt des Glassubstrats (190) zwischen der Klebefläche (168) eines ersten Abschnitts (162) des Klebebands (160) und der Klebefläche (168) eines zweiten Abschnitts (164) des Klebebands (160) positioniert ist und die zwischen dem ersten Abschnitt (162) und dem zweiten Abschnitt (164) angeordnete Klebefläche (168) eines dritten Abschnitts (166) des Klebebands (160) vom ersten Seitenrand (196) des Glassubstrats (190) beabstandet ist, wobei der dritte Abschnitt (166) die Handhabungslasche (172) bildet, die sich über den ersten Seitenrand (196) des Glassubstrats (190) hinaus erstreckt.

2. Verfahren nach Anspruch 1, ferner umfassend:
Laminieren des ersten Abschnitts (162) des Klebebands (160) gegen die erste Hauptfläche (192) des Glassubstrats (190) und
Laminieren des zweiten Abschnitts (164) des Klebebands (160) gegen die zweite Hauptfläche (194) des Glassubstrats (190).

3. Verfahren nach Anspruch 1, wobei der erste Abschnitt (162) des Klebebands (160) und der zweite Abschnitt (164) des Klebebands (160) mit einem Paar gegenüberliegender Quetschrollen (112) gleichzeitig laminiert werden.

4. Verfahren nach Anspruch 1, ferner umfassend das Zusammendrücken der Handhabungslasche (172) zwischen einem Paar gegenüberliegender Quetschrollen (112).

5. Verfahren nach Anspruch 1, wobei die Klebefläche (168) des dritten Abschnitts (166) des Klebebands (160) nach dem Falten nicht mit dem ersten Seitenrand (196) des Glassubstrats (190) in Kontakt ist.

6. Verfahren nach Anspruch 1, wobei der Faltpflug (116) einen ersten Keil (128) und einen zweiten Keil (130) umfasst und eine Kontaktfläche des ersten Keils (128) und eine Kontaktfläche des zweiten Keils (130) bezüglich einander abgewinkelt sind, so dass sich ein Abstand zwischen dem ersten Keil (128) und dem zweiten Keil (130) in der Förderrichtung verjüngt.

7. Verfahren nach Anspruch 1, ferner umfassend das Stützen von mindestens einem Abschnitt des Glassubstrats (190) auf einem Luftkissen während des Faltens des Klebebands (160).

8. Verfahren nach Anspruch 1, wobei das Klebeband (160) um eine sich entlang einer axialen Länge des Klebebands (160) erstreckende Perforation gefaltet wird.

9. Vorrichtung zum Falten eines Klebebands (160) zu einer Handhabungslasche (172) an einem Rand (196) eines Glassubstrats (190), wobei die Vorrichtung Folgendes umfasst:
ein stromaufwärtiges Ende (132) und ein stromabwärtiges Ende (134) mit einer Glasförderbahn, die sich in einer Förderrichtung (136) von dem stromaufwärtigen Ende (132) zu dem stromabwärtigen Ende (134) erstreckt,
eine Abwickelspindel (104) mit einer Spindelrotationsachse (140), die im Wesentlichen senkrecht zur Förderrichtung (136) verläuft, wobei die Abwickelspindel (104) ein gewickeltes Klebeband (160) stützt,
einen Faltpflug (116), der das Klebeband (160) auf das auf der Glasförderbahn gezogene Glassubstrat (190) faltet, wobei der Faltpflug (116) einen ersten Keil (128) und einen zweiten Keil (130) umfasst, die so positioniert sind, dass die Glasförderbahn zwischen einer Kontaktfläche des ersten Keils (128) und einer Kontaktfläche des zweiten Keils (130) angeordnet ist, und
ein erstes Paar Quetschrollen (112) zum Laminieren des Klebebands (160) auf das auf der Glasförderbahn gezogene Glassubstrat (190), wobei das erste Paar Quetschrollen (112) stromabwärts von dem Faltpflug (116) positioniert ist und eine erste Quetschrolle (112a) und eine zweite Quetschrolle (112b) umfasst, die so positioniert sind, dass die Glasförderbahn zwischen der ersten Quetschrolle (112a) und der zweiten Quetschrolle (112b) angeordnet ist, wobei die erste Quetschrolle (112a) und die zweite Quetschrolle (112b) im Wesentlichen senkrecht zur Förderrichtung (136) verlaufende Rotationsachsen (140) haben.

10. Vorrichtung nach Anspruch 9, wobei die Kontaktfläche des ersten Keils (128) und die Kontaktfläche des zweiten Keils (130) bezüglich einander abgewinkelt sind, so dass sich ein Abstand zwischen der Kontaktfläche des ersten Keils (128) und der Kontaktfläche des zweiten Keils (130) in der Förderrichtung (136) verjüngt.

11. Vorrichtung nach Anspruch 9, ferner umfassend ein zweites Paar Quetschrollen, das stromabwärts von dem ersten Paar Quetschrollen (112) positioniert ist, wobei das zweite Paar Quetschrollen eine dritte Quetschrolle (114a) und eine vierte Quetschrolle (114b) umfasst, die so positioniert sind, dass die Glasförderbahn (136) zwischen der dritten Quetschrolle (114a) und der vierten Quetschrolle (114b) angeordnet ist, wobei die dritte Quetschrolle (114a) und die vierte Quetschrolle (114b) im Wesentlichen senkrecht zur Förderrichtung (136) verlaufende Rotationsachsen (140) haben, wobei das zweite Paar Quetschrollen in einer axialen Richtung vom ersten Paar Quetschrollen versetzt ist.

12. Vorrichtung nach Anspruch 9, wobei die Abwickelspindel (104), der Faltpflug (116) und das erste Paar Quetschrollen (112) an einem Basisrahmen (102) angebracht sind.

13. Vorrichtung nach Anspruch 9, ferner umfassend mindestens eine Luftschwebevorrichtung (118), wobei die mindestens eine Luftschwebevorrichtung (118) das Glassubstrat (190) über mindestens einen Abschnitt der Glasförderbahn stützt.

14. Vorrichtung nach Anspruch 9, ferner umfassend mindestens eine gekrümmte Luftschwebevorrichtung (118), wobei die mindestens eine gekrümmte Luftschwebevorrichtung (118) das Glassubstrat (190) von einer Anfangsbahn zu der Glasförderbahn umleitet.

## Revendications

1. Procédé de formation d'un substrat de verre (190) avec une languette de retenue (172), le procédé comprenant :
transporter le substrat de verre (190) dans une direction de transport (136), le substrat de verre (190) comprenant une première grande surface (192) opposée à une deuxième grande surface (194), la première grande surface (192) et la deuxième grande surface (194) s'étendant entre un premier bord latéral (196) et un deuxième bord latéral (196) ;
positionner un ruban de bande adhésive (160) en position adjacente au premier bord latéral (196) du substrat de verre (190) de telle sorte qu'une surface adhésive (168) du ruban de bande adhésive (160) soit espacée du premier bord latéral (196) du substrat de verre (190) et que la surface adhésive (168) soit substantiellement perpendiculaire à la première grande surface (192) et à la deuxième grande surface (194) ;
orienter le ruban de bande adhésive (160) et le substrat de verre (190) par le biais d'une lame de pliage (116),
plier le ruban de bande adhésive (160) avec la lame de pliage (116), de telle sorte qu'au moins une portion du substrat de verre (190) soit positionnée entre la surface adhésive (168) d'une première portion (162) du ruban de bande adhésive (160) et la surface adhésive (168) d'une deuxième portion (164) du ruban de bande adhésive (160), et la surface adhésive (168) d'une troisième portion (166) du ruban de bande adhésive (160) disposée entre la première portion (162) et la deuxième portion (164) soit espacée du premier bord latéral (196) du substrat de verre (190), la troisième portion (166) formant la languette de retenue (172) s'étendant au-delà du premier bord latéral (196) du substrat de verre (190).

2. Procédé selon la revendication 1, comprenant en outre :
laminer la première portion (162) du ruban de bande adhésive (160) contre la première grande surface (192) du substrat de verre (190) ; et
laminer la deuxième portion (164) du ruban de bande adhésive (160) contre la deuxième grande surface (194) du substrat de verre (190).

3. Procédé selon la revendication 1, dans lequel la première portion (162) du ruban de bande adhésive (160) et la deuxième portion (164) du ruban de bande adhésive (160) sont laminées simultanément avec une paire de rouleaux de pinçage opposés (112).

4. Procédé selon la revendication 1, comprenant en outre le fait de comprimer la languette de retenue (172) entre une paire de rouleaux de pinçage opposés (112).

5. Procédé selon la revendication 1, dans lequel, après le pliage, la surface adhésive (168) de la troisième portion (166) du ruban de bande adhésive (160) n'est pas en contact avec le premier bord latéral (196) du substrat de verre (190).

6. Procédé selon la revendication 1, dans lequel la lame de pliage (116) comprend une première cale (128) et une deuxième cale (130) et une surface de contact de la première cale (128) et une surface de contact de la deuxième cale (130) sont inclinées l'une par rapport à l'autre de telle sorte qu'un espacement entre la première cale (128) et la deuxième cale (130) se rétrécisse dans la direction de transport.

7. Procédé selon la revendication 1, comprenant en outre le fait de supporter au moins une portion du substrat de verre (190) sur un coussin d'air à mesure que le ruban de bande adhésive (160) est plié.

8. Procédé selon la revendication 1, dans lequel le ruban de bande adhésive (160) est plié autour d'une perforation s'étendant le long d'une longueur axiale du ruban de bande adhésive (160).

9. Appareil pour plier un ruban de bande adhésive (160) pour former une languette de retenue (172) sur un bord (196) d'un substrat de verre (190), l'appareil comprenant :
une extrémité amont (132) et une extrémité aval (134) avec un chemin de transport de verre s'étendant dans une direction de transport (136) depuis l'extrémité amont (132) jusqu'à l'extrémité aval (134) ;
une broche de déroulement (104) ayant un axe de rotation de broche (140) qui est substantiellement perpendiculaire à la direction de transport (136), la broche de déroulement (104) supportant un ruban de bande adhésive enroulé (160) ;
une lame de pliage (116) pliant le ruban de bande adhésive (160) sur le substrat de verre (190) tiré sur le chemin de transport de verre, la lame de pliage (116) comprenant une première cale (128) et une deuxième cale (130) positionnées de telle sorte que le chemin de transport de verre soit disposé entre une surface de contact de la première cale (128) et une surface de contact de la deuxième cale (130) ; et
une première paire de rouleaux de pinçage (112) pour laminer le ruban de bande adhésive (160) sur le substrat de verre (190) tiré sur le chemin de transport de verre, la première paire de rouleaux de pinçage (112) étant positionnée en aval de la lame de pliage (116) et comprenant un premier rouleau de pinçage (112a) et un deuxième rouleau de pinçage (112b) positionnés de telle sorte que le chemin de transport de verre soit disposé entre le premier rouleau de pinçage (112a) et le deuxième rouleau de pinçage (112b), le premier rouleau de pinçage (112a) et le deuxième rouleau de pinçage (112b) ayant des axes de rotation (140) substantiellement perpendiculaires à la direction de transport (136).

10. Appareil selon la revendication 9, dans lequel la surface de contact de la première cale (128) et la surface de contact de la deuxième cale (130) sont inclinées l'une par rapport à l'autre de telle sorte qu'un espacement entre la surface de contact de la première cale (128) et la surface de contact de la deuxième cale (130) se rétrécisse dans la direction de transport (136).

11. Appareil selon la revendication 9, comprenant en outre une deuxième paire de rouleaux de pinçage positionnée en aval de la première paire de rouleaux de pinçage (112), la deuxième paire de rouleaux de pinçage comprenant un troisième rouleau de pinçage (114a) et un quatrième rouleau de pinçage (114b) positionnés de telle sorte que le chemin de transport de verre (136) soit disposé entre le troisième rouleau de pinçage (114a) et le quatrième rouleau de pinçage (114b), le troisième rouleau de pinçage (114a) et le quatrième rouleau de pinçage (114b) ayant des axes de rotation (140) substantiellement perpendiculaires à la direction de transport (136), la deuxième paire de rouleaux de pinçage étant décalée par rapport à la première paire de rouleaux de pinçage dans une direction axiale.

12. Appareil selon la revendication 9, dans lequel la broche de déroulement (104), la lame de pliage (116) et la première paire de rouleaux de pinçage (112) sont attachées à un cadre de base (102).

13. Appareil selon la revendication 9, comprenant en outre au moins un dispositif de flottement à l'air (118), l'au moins un dispositif de flottement à l'air (118) supportant le substrat de verre (190) sur au moins une portion du chemin de transport de verre.

14. Appareil selon la revendication 9, comprenant en outre au moins un dispositif de flottement à l'air courbe (118), l'au moins un dispositif de flottement à l'air courbe (118) réorientant le substrat de verre (190) d'un chemin initial vers le chemin de transport de verre.
